# EUROPÄISCHE PATENTSCHRIFT

(11) **EP 1 167 452 B1**
(45) Veröffentlichungstag und Bekanntmachung des Hinweises auf die Patenterteilung: **20.10.2004**
(21) Anmeldenummer: 01113719.7
(22) Anmeldetag: 05.06.2001
(51) Int. Cl.: C08L 71/02, C08G 65/32, C11D 1/78, C08G 65/327, C11D 1/72

(54) **Phosphorsäureester als Pigmentnetzmittel**
Phosphoric acid esters as wetting agents for pigments
Esters d acide phosporique comme agents mouillants pour pigments

(30) Priorität: 15.06.2000 DE 10029648
(43) Veröffentlichungstag der Anmeldung: 02.01.2002
(73) Patentinhaber: Goldschmidt AG, 45127 Essen (DE)
(72) Erfinder: Esselborn, Eberhard, 45147 Essen (DE); Heilen, Wernfried, 46519 Alpen (DE); Lehmann, Kathrin, 51377 Leverkusen (DE); Reuter, Ellen, 44799 Bochum (DE); Silber, Stefan, Dr., 47804 Krefeld (DE); Stüttgen, Andreas, 47167 Duisburg (DE)

(56) Entgegenhaltungen:
- EP-A- 0 403 718
- EP-A- 0 940 406
- EP-A- 1 078 946

## Beschreibung

Die Erfindung betrifft die Verwendung besonderer Phosphorsäureester als Pigmentnetzmittel für Pigmentpasten, wässrige, lösemittelhaltige, lösemittelarme u. lösemittelfreie Lacke und Druckfarben, basierend auf Polystyrolblock (b)-polyalkylenoxid-Copolymeren.

Phosphorsäureester und ihre Verwendung als Dispergiermittel sind bekannt und dem Stand der Technik zu entnehmen. So werden in der US-A-4 720 514 Phosphorsäureester einer Reihe von Alkylphenolethoxylaten beschrieben, die vorteilhaft zur Formulierung wäßriger Pigmentdispersionen eingesetzt werden können. Phosphorsäureester für eine ähnliche Anwendung beschreibt EP-A-0 256 427. Auch aus der DE-A-3542441 sind Bisphosphorsäuremonoester von Blockcopolymerisaten und deren Salze bekannt. Auch wird deren mögliche Verwendung als Dispergiermittel und Emulgator, insbesondere zur Herstellung von Pflanzenschutzformulierungen beschrieben. Die US-A-4872916 beschreibt die Verwendung von Phosphorsäureestern basierend auf Alkylenoxiden geradkettiger oder verzweigter Aliphaten als Pigmentdispergiermittel. In gleicher Weise ist in US-A-3874891 die Verwendung entsprechender Sulfate geschildert. In den Schriften US-A-5 130 463 und US-A-5 151 218 wird über Phosphorsäureester auf Basis hydroxyterminierter Polyadditions- bzw. Polykondensationsprodukte berichtet, die für die Herstellung hochgefüllter Polyester-Formmassen, im besonderen für SMC- und BMC-Formulierungen (SMC = sheet molding compounds; BMC = bulk molding compounds), Verwendung finden. Bifunktionelle Phosphorsäureester, hergestellt über die Mannich-Moedritzer-Reaktion, und deren Adsorptionscharakteristika auf Calciumcarbonat beschreibt J. Appl. Polm. Sci. 65, 2545 (1997). In der US-A 4456486 werden unter anderem saure oder neutrale Phosphorsäureester von Fettalkoholen und alkoxylierten Fettalkoholen als Behandlungsmittel für bestimmte Blaupigmente beschrieben. In ähnlicher Weise beschreibt die EP-A-256427 die Verwendung von Phosphorsäureestern alkoxylierter Fettalkohole zur Herstellung von Pigmentdispersionen, die sich für wäßrige Anwendungen eignen sollen. Die US-A-4720514 beschreibt Pigmentdispersionen hergestellt unter Verwendung von Phosphorsäureestern von Alkoxylaten unterschiedlicher Struktur. US-A-4698099 beschreibt Pigmentdispersionen, welche als Dispergiermittel Phosphorsäureester von monohydroxyterminierten Polyestern enthalten.

In der DE-A-3930687 werden Phosphorsäureester (OH)₃₋ₙPO-(OR)ₙ und deren Salze beschrieben, die dadurch gekennzeichnet sind, daß R einen mindestens ein Ethersauerstoffatom (-O-) und mindestens eine Carbonsäuregruppierung (-COO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht von 200 bis 10000 darstellt, wobei die Wasserstoffatome der aliphatischen Gruppen teilweise durch Halogenatome ersetzt sein können, das Verhältnis der Zahl der Carbonsäureestergruppen und/oder Urethangruppen im Molekül (oder in jeder Gruppe R) im Bereich von 1:20 bis 20:1 vorliegt und daß n für 1 oder 2 steht. Insbesondere ist auch die Verwendung dieser Phosphorsäurester als Dispergiermittel genannt. Polyoxyalkylencarbonylmonoetherphosphate und deren Verwendung als Dispergiermitel sind auch aus der GB-A-19980429 bekannt.

Auch die Verwendung solcher Phosphorsäureester zur Herstellung von Emulsionspolymerisaten ist bekannt, wobei insbesondere die gute Pigmentierbarkeit solcher vor allem auch koagulatarmer Emulsionspolymerisate hervorgehoben wird (DE-A-19810658, JP-A-11246799 und WO 99/46337).

In der DE-A-19806964 sind besondere Phosphorsäureester beschrieben, die auf Polystyrol-block (b)-Polyalkylenoxid-Copolymeren basieren, welche ausgehend von einem monofunktionellen Startalkoholol durch sequentielle Anlagerung von Styroloxid und einem Alkylenoxid hergestellt werden. Kennzeichnend für diese Phosphorsäurester ist unter anderem die Verwendung von wenigstens 2 Mol Styroloxid zu deren Herstellung. Gleichfalls ist die Verwendung dieser Phosphorsäureester als Dispergiermittel für Pigmente und Füllstoffe beschrieben. In der DE-A-19940797 ist die Verwendung nichtionischer blockcopolymerer, styroloxidhaltiger Polyalkylenoxide als schaumarme Pigmentnetzmittel beschrieben, wobei die Blockcopolymere unter anderem dadurch charakterisiert sind, daß zu ihrer Herstellung weniger als 2 Mol Styroloxid verwandt werden.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muß die einmal erreichte Verteilung stabilisiert werden. Die stabilisierende Wirkung wird in vielen Fällen auch von Bindemittelkomponenten wahrgenommen. Dies ist insbesondere bei sauren (Styrol-)acrylaten, wie sie vor allem zur Herstellung von Druckfarben Verwendung finden, der Fall. In diesen Fällen werden Pigmentnetzmittel verwendet, deren Wirkung darin besteht, die Pigmentoberfläche sehr rasch zu benetzen und somit die Luft von der Oberfläche der Pigmente durch die Flüssigkeit des Mahlansatzes zu verdrängen. Insbesondere, wenn Feststoffe mit unpolarer Oberfläche in wäßrigen Lacken eingesetzt werden, muß die Benetzung durch Netzmittel unterstützt werden. Dies gestattet eine günstige Farbstärkeentwicklung und somit eine nahezu optimale Ausnutzung der eingetragenen Energie.

Insbesondere in der Bautenfarbenindustrie wird zudem von wäßrigen, gegebenenfalls colöserhaltigen Pigmentpasten Gebrauch gemacht, die universell in wäßrigen Dispersionsfarben auf Reinacrylat-, Styrolacrylat- oder Silicatbasis als auch in unpolaren langölalkydbasierenden Malerlacken zum Abtönen eingesetzt werden.

Hierfür eignen sich insbesondere die Phosphorsäureester von Alkylphenolethoxylaten oder Fettalkoholethoxylaten, die zudem zu einer sterischen und elektrostatischen Stabilisierung erreichter Pigmentverteilungen beitragen. Die sehr leistungsfähigen Phosphorsäureester von Alkylphenolethoxylaten sind aus ökotoxikologischen Gründen in die Kritik geraten, und deren Verwendung wird bereits in einigen Staaten gesetzgeberisch reguliert. Die Phosporsäurester von Fettalkoholethoxylaten erreichen in vielen Fällen nicht die guten Eigenschaften der Alkylphenolethoxylatderivate. Da es ihnen an adsorptionsfähigen Gruppen fehlt, sind die pigmentbenetzenden Eigenschaften schwächer ausgeprägt. Insbesondere der nicht adsorbierte Teil dieser Produktgruppe stabilisiert zudem in unerwünschter Weise den Schaum, der nur mit Hilfe stark entschäumungsaktiver Substanzen, die wiederum andere negative Begleiterscheinungen wie unerwünschte Oberflächendefekte hervorrufen, zurückgedrängt werden kann. Durch den Einsatz vieler Dispergieradditive wird auch die Wasserfestigkeit oder Lichtbeständikeit von Beschichtungen negativ beeinflußt.

Die bekannten Phosphorsäureester haben zudem den Nachteil, daß sie in der Regel nicht universell einsetzbar sind, da es vielfach an einer ausreichenden Kompatibilität von Dispergieradditiv und Bindemittel bzw. Dispergieradditiv und umgebendem Medium (wäßrige oder lösungsmittelhaltige Formulierungen) mangelt. Auch spielt der chemische Aufbau der Phosphorsäureester eine große Rolle: In wäßrigen Formulierungen werden bevorzugt nur solche Phosphorsäureester eingesetzt, die keine zusätzlichen hydrolysierbaren funktionellen Gruppen, wie Ester- oder Urethangruppen, im Molekül aufweisen. Häufig sind hohe Zusätze an Dispergieradditiven erforderlich, um das Auftreten von Agglomeraten zu unterdrücken; die erreichbaren Füllgrade sind unbefriedigend niedrig, die Stabilität der Dispersionen und damit deren Viskositätskonstanz ist oft unzureichend; Flokkulation und Aggregation lassen sich nicht immer vermeiden, so daß es einer zu sichtbaren Separation sowie zu Verlaufs- und Oberflächenstörungen kommen kann.

Anwendungen styroloxidhaltiger Blockcopolymerisate in der Lack- und Druckfarbenindustrie sind noch weitgehend unbekannt. Bekannt sind unter anderem (DE-A-198 06 964) Polystyroloxidblock (b) -polyalkylenoxid-copolymere, welche ausgehend von einem monofunktionellem Startalkohol durch sequentielle Anlagerung von wenigstens 2 Mol Styroloxid und einem Alkylenoxid und nachfolgende Phosphorylierung zu den entsprechenden Phosphorsäureestern umgesetzt werden. Diese Blockcopolymeren werden gleichfalls als Dispergatoren verwendet.

Nachteilig ist die schlechtere biologische Abbaubarkeit dieser Tenside bei längeren Styroloxidblöcken. Auch ist naturgemäß die Diffusionsbeweglichkeit höhermolekularer Dispergieradditive nicht allzu hoch, was für rasch ablaufende Pigmentnetzvorgänge nachteilig ist.

Der vorliegenden Erfindung lag daher die Aufgabe zugrunde, die vorgenannten Anforderungen zu erfüllen, wobei eine hohe Pigmentaffinität mit einer geringen Neigung zur Schaumstabilisierung und einer hohen Diffusionsbeweglichkeit einhergehen sollte, ohne daß andere essentielle Beschichtungseigenschaften negativ beeinflußt werden.

Diese Aufgabe wird erfindungsgemäß gelöst durch die Verwendung blockcopolymerer Phosphorsäureester und deren Salze der allgemeinen Formel (I)

[R¹O(SO)ₐ(EO)_{b}(CH₂CHCH₃O)_{c}(BO)_{d}]ₓ PO- (OH)₃₋ₓ (I)

wobei
R¹ = ein geradkettiger oder verzweigter oder cycloaliphatischer Rest mit 1 bis 22 Kohlenstoffatomen,
SO = Styroloxid,
EO = Ethylenoxid,
BO = Butylenoxid und
a = 1 bis 1,9,
b = 3 bis 100,
c = 0 bis 10,
d = 0 bis 3,
x = 1 oder 2 sind,
wobei b>= a+c+d ist, als Pigmentnetzmittel für Pigmentpasten, wäßrige, lösemittelhaltige, lösemittelarme und lösemittelfreie Lacke und Druckfarben. Insbesondere werden die Phosphorsäureester der allgemeinen Formel I in einer Menge von 2 bis 200 Gew.-%, bezogen auf das Gewicht des jeweiligen Pigmentes eingesetzt.

Von wesentlicher Bedeutung für die Eigenschaften der Verbindungen sind die Zahlenwerte der Indizes a, b, c und d. a gibt die Anzahl der Styroloxidgruppen an, die insbesondere bei hydrophoben Pigmentoberflächen für eine hohe Adsorption Sorge tragen. a hat hier einen Wert von 1 bis 1,9. b bestimmt die Anzahl der Ethylenoxidgruppen, wobei b Werte von 3 bis 100 annehmen kann, vorzugsweise von 10 bis 30. c bestimmt die Anzahl der Propylenoxidgruppen und hat einen Wert von 0 bis 10, vorzugsweise 1 bis 3. d bestimmt die Anzahl der Butylenoxidgruppen und hat einen Wert von 0 bis 3, vorzugsweise von 0 oder 1. Es ist dem Fachmann geläufig, daß die Verbindungen in Form eines Gemisches mit einer im wesentlichen durch statistische Gesetze geregelten Verteilung vorliegen. Dabei gilt, daß gemischte Alkoxylate erfindungsgemäß zu verwenden sind. Durch die verschiedenen Alkylenoxidmonomere und deren Anteil am Gesamtpolymer läßt sich spezifisch die Hydrophobie/Hydrophilie-Balance derart steuern, daß gegebenenfalls sterische Erfordernisse der Pigmentoberfläche und insbesondere die Verträglichkeit in dem jeweiligen Beschichtungssystem gezielt angepaßt werden können. Die Anordnung der Alkylenoxidgruppierungen kann statistisch oder blockweise erfolgen. Besonders bevorzugt sind blockweise Anordnungen mit endständigen, eher hydrophoben Gruppierungen wie Propylenoxid oder insbesondere Butylenoxid. Das Stoffmengenverhältnis der Ethylenoxidgruppen zu den anderen hydrophoben Alkylenoxidgruppen beträgt dabei: b>= a+c+d. Es hat sich gezeigt, daß die Strukturen der Polymerisate für die erfindungsgemäß erzielten Vorteile von entscheidender Bedeutung sind. Vorzugsweise liegen die jeweiligen Alkylenoxidgruppierungen in der genannten Reihenfolge der allgemeinen Formel I vor. Jedoch ist auch jede beliebige andere Reihenfolgen in die Beschreibung eingeschlossen.

In gleicher Weise bedeutsam sind die Strukturen der geradkettigen oder verzweigten oder cycloaliphatischen Reste R¹, mit denen der Platzbedarf dieser Tenside an Grenzflächen gesteuert werden kann. Für viele Anwendungen sind im Sinne einer Schaumunterdrückung verzweigte aliphatische Reste R¹ vorteilhaft. Besonders bevorzugt sind deshalb verzweigte C₉-Alkohole als Startagenzien für die Alkoxylierung. Insbesondere bevorzugt sind 3,5,5-Trimethylhexan-1-yl- und 2,6-Dimethylheptan-4-yl-Reste; es ist dem Fachmann geläufig, daß die zugrundeliegenden Alkohole insbesondere als isomere Gemische vorliegen, wobei das jeweilige Isomerengemisch von den jeweiligen Prozeßbedingungen stark abhängig ist.

Die Herstellung der hydroxyfunktionellen blockcopolymeren, styroloxidhaltigen Polyalkylenoxide, die Ausgangsmaterialien für die erfindungsgemäß zu verwendenden Phosphorsäureester darstellen, ist bereits prinzipiell in DE-A-199 40 797 beschrieben

Die Umsetzung zu den erfindungsgemäß zu verwendenden Phosphorsäureestern erfolgt durch Reaktion der endständigen (terminalen) Hydroxylgruppen mit einer phosphorsäureesterbildenden Phosphorverbindung in dem Stand der Technik entsprechender Weise. Geeignete Phosphorverbindungen sind zum Beispiel Phosphorpentoxid, Phosphorsäurechlorid oder Polyphosphorsäuren der allgemeinen Formel Hₙ₊₂PₙO₃ₙ₊₁. Besonders bevorzugt wird für die Darstellung der Phosphorsäureester eine kommerziell erhältliche Polyphosphorsäure mit einem Gehalt von etwa 85 Gew.-% P₄O₁₀ eingesetzt. Die Reaktion erfolgt in der Regel ohne Lösungsmittel bei Temperaturen von etwa 60 bis 120°C, insbesondere bei Temperaturen von 80 bis 100°C. Zur Entfernung etwaiger vorhandener Feuchtigkeitsspuren können zunächst mit einem inerten Lösungsmittel, wie beispielsweise Toluol oder Xylol, Reste von Wasser aus dem System entfernt werden, bevor die Umsetzung mit der Polyphosphorsäure erfolgt. Prinzipiell kann die Umsetzung aber auch in Gegenwart von Lösungsmitteln oder Lösungsmittelgemischen erfolgen.

Die terminale, zu veresternde Hydroxylgruppe der amphiphilen Blockcopolymere wird in der Veresterungsreaktion bevorzugt zu 50 bis 100 %, besonders bevorzugt quantitativ verestert. Abhängig von der eingesetzten Menge der phosphorsäureesterbildenden Phosphorverbindung, bezogen auf das Hydroxyäquivalent der Blockcopolymere, werden dabei entweder bevorzugt Monoester, Diester oder Gemische von Mono- und Diester erhalten.

In Abhängigkeit von dem pH-Wert des Einsatzmediums können die erfindungsgemäß zu verwendenden Phosphorsäureester auch in partiell oder vollständig neutralisierter Form vorliegen. Als Gegenionen seien hier insbesondere Alkali- und Erdalkalimetallionen sowie gegebenenfalls substituierte Ammoniumionen genannt.

Beispiele erfindungsgemäß zu verwendender Phosphorsäureester sind :
a) ((3,5,5-Trimethyl-1-hexanol)(SO)₁(EO)₅)₁PO(OH)₂
b) ((3,5,5-Trimethyl-1-hexanol)(SO)₁(EO)₉)₁PO(OH)₂
c) ((1-Nonanol)(SO)₁(EO)₉)₁PO(OH)₂
d) ((2,6-Dimethyl-4-heptanol) (SO)₁(EO)₉(BO)₃)₁PO(OH)₂
e) ((3,5,5-Trimethyl-1-hexanol)(SO)_{1,9}(EO)₁₂)₁PO(OH)₂
f) ((1-Nonanol)(SO)₁(EO)₉(CH₂CHCH₃O)₃)₁PO(OH)₂

Zur Herstellung wäßriger Pigmentpasten werden 2,0 bis 200 Gew.-% der erfindungsgemäß zu verwendenden Phosphorsäureester, vorzugsweise 5,0 bis 100 Gew.-% (bezogen auf das Gewicht der Pigmente) verwendet. Die Phosphorsäureester, allein oder in Kombination eingesetzt, können bei der erfindungsgemäßen Verwendung entweder vorab mit den zu dispergierenden Pigmenten vermischt oder direkt in dem wäßrigen oder lösemittelhaltigen Dispergiermedium vor oder gleichzeitig mit der Zugabe der Pigmente und etwaiger Feststoffe gelöst werden. Mitunter ist es auch bevorzugt, die Phosphorsäureester vor dem Dispergierprozeß auf die zu dispergierenden Feststoffe aufzubringen, beispielsweise aufzusprühen.

Es ist dem Fachmann geläufig, daß die Phosphorsäureester naturgemäß auch mit anderen an sich bekannten pigmentbenetzenden Additiven und Harzen kombiniert werden können.

Als Pigmente können in diesem Zusammenhang beispielsweise anorganische oder organische Pigmente sowie Ruße genannt werden.

Als anorganische Pigmente seien exemplarisch genannt Titandioxide und Eisenoxide. In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-Pyrrol-, Naphthalintetracarbonsäure-, Perylen-, Isoamidolin(on)-, Flavanthron-, Pyranthron- oder Isoviolanthron-Reihe. Besonders bevorzugt eignen sich die erfindungsgemäß zu verwendenden Dispergieradditive zur Herstellung wäßriger Rußpasten.

Füllstoffe, die beispielsweise in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen die erfindungsgemäß hergestellten Pigmentpasten eingebracht werden können, kommen beliebige wäßrige 1K- oder 2K-Lacke in Betracht, aber auch unpolare lösemittelarme oder lösemittelfreie Lacksysteme. Beispielhaft genannt seien wäßrige 1K-Lacke, wie solche auf Basis von Alkyl-, Acrylat-, Epoxid-, Polyvinylacetat-, Polyesteroder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidsysteme genannt. Als lösemittelarme Lacke seien insbesondere solche auf Basis von Langölalkydölen genannt.

Diese hochwirksamen anionischen Tenside stellen überdies hochwirksame Emulgatoren dar und sind als solche beispielsweise zur Herstellung von koagulatarmen Emulsionspolymerisaten, die durch ein hohes Pigmentaufnahmevermögen charakterisiert sind, vorzüglich geeignet. Auch hierbei können die erfindungsgemäß zu verwendenden Phosphorsäureester allein oder in Kombination eingesetzt werden.

In analoger Weise lassen sich aus den Polyalkylenoxiden, die als Vorstufen zur Synthese der Phosphatester dienen, auch nach dem Stand der Technik entsprechenden Verfahren unter Verwendung bekannter Sulfatierungs- und Sulfonierungsreagenzien neuartige Sulfat- und Sulfonatester herstellen. Entsprechende Verbindungen, die Styroloxid als Alkylenoxidmonomer enthalten, sind bis dato nicht bekannt. Es ist anzunehmen, daß diese neuen Verbindungen gleichfalls wie die hier beschriebenen Phosphatester zur Pigmentdispergierung oder Emulsionsstabilisierung verwendet werden können.

In den nachfolgenden Beispielen wird zunächst die Herstellung der erfindungsgemäß einzusetzenden Verbindungen beschrieben. Es folgen anwendungstechnische Beispiele zum Nachweis der Eigenschaften der erfindungsgemäßen Verbindungen und zum Vergleich dazu Eigenschaften, die mit bekannten Produkten des Standes der Technik erzielt werden können.

Es ist verständlich und dem Fachmann geläufig, daß diese Beispiele nur eine Auswahl der vorhandenen Möglichkeiten darstellen und keineswegs als Beschränkung anzusehen sind.

### Ausführungsbeispiele:

### Herstellungsbeispiele:

### Synthese von Polyalkylenoxid A1V

3364 g (23,4 Mol) Trimethylhexanol und 163 g (2,3 Mol) Kaliummethylat wurden in einen Reaktor gegeben. Nach sorgfältiger Spülung mit Reinststickstoff wurde auf 110°C erhitzt und 3082 g (25,4 Mol) Styroloxid innerhalb von einer Stunde zugegeben. Nach weiteren zwei Stunden war die Anlagerung des Styroloxides beendet, erkennbar an einem Restgehalt an Styroloxid, der laut GC < 0,1 Gew.-% lag. Anschließend wurden 3392 g (77,1 Mol) Ethylenoxid so schnell in den Reaktor dosiert, daß die Innentemperatur 120°C und der Druck 6 bar nicht überschritt. Nach vollständiger Einleitung des Ethylenoxides wurde die Temperatur so lange auf 115°C gehalten, bis ein konstanter Manometerdruck das Ende der Nachreaktion anzeigte. Schließlich wurden bei 80 bis 90°C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt.

Die Molekularmenge aus der Bestimmung der Hydroxylzahl bei einer angenommenen Funktionalität von 1 betrug M = 467 g/mol.

In analoger Weise wurden nach dem Stand der Technik entsprechenden Verfahren gemäß Verbindungen A2V bis A6V der Verbindung A7V gegenübergestellt:

| Verbindung | R¹ | a | b | c | d | M |
|---|---|---|---|---|---|---|
| | | | | | | |
| A1V | 3,5,5-Trimethylhexanyl | 1 | 5 | 0 | 0 | 467 |
| A2V | 3,5,5-Trimethylhexanyl | 1 | 9 | 0 | 0 | 630 |
| A3V | 1-Nonanyl | 1 | 9 | 0 | 0 | 635 |
| A4V | 2,6-Dimethyl-4-heptanyl | 1 | 9 | 0 | 3 | 845 |
| A5V | 3,5,5-Trimethylhexanyl | 1,9 | 12 | 0 | 0 | 850 |
| A6V | 1-Nonanyl | 1 | 9 | 3 | 0 | 810 |
| A7V | 3,5,5-Trimethylhexanyl | 2,1 | 9 | 0 | 0 | 75 |

### Synthese der Phosphorsäureester: A1-A6 und A7

x g (entspricht 1 OH-Äquivalent) des Blockcopolymeren wurden im Reaktor vorgelegt und nach Zugabe von etwa 50 ml Toluol auf 110°C erhitzt. Durch Anlegen von Vakuum wurden alle flüchtigen Anteile, insbesondere evtl. im Produkt vorhandenes Wasser, aus dem Reaktionsraum destillativ entfernt. Nach dem Belüften mit Stickstoff temperierte man auf 80°C und gab 85 g der flüssigen Polyphosphorsäure (0,25 Mol P₄O₁₀; Hersteller: Merck; Gehalt als P₄O₁₀ berechnet: ca. 85%) hinzu. Nach 2 Stunden ist die Reaktion abgeschlossen. Im ¹H-NMR-Spektrum ist keine aliphatische Hydroxylgruppe mehr nachweisbar.

In analoger Weise wurden nach dem Stand der Technik entsprechende Verfahren die Verbindungen A1 bis A6 und A7 hergestellt.

Zur Herstellung einer wässrigen Lösung wurde das 100%ige Produkt unter intensiver Kühlung mit verdünnter Kalilauge einer Konzentration von 10 Gew.-% neutralisiert. Für nachfolgend beschriebene anwendungstechnische Untersuchungen wurde jeweils auf einen Festkörpergehalt von 35 % eingestellt.

Als Vergleichsbeispiele wurden ein Fettsäureethoxylat B1 (Tego® Dispers 740W, Fa.Tego), ein Nonylphenolethoxylat mit 9 Mol Ethylenoxid B2 (Berol® 09, Fa.Akzo), ein entsprechendes Monophosphatderivat B3 (Berol® 733, Fa.Akzo) sowie ein mit 10 Mol EO ethoxylierter Oleylalkohol B4 (Alkanol O10, Fa.Tego) verwendet.

### Anwendungstechnische Beispiele:

Zur Überprüfung der Wirksamkeit der erfindungsgemäß als Dispergieradditiv zu verwendenden Phosphorsäureester sowie der Vergleichsverbindungen wurde wie folgt vorgegangen:

### Herstellung der Pigmentpasten:

Zur Herstellung der Pigmentpasten wurden die jeweiligen Additive mit Wasser und gegebenenfalls Antischaummitteln gemischt und danach die Pigmente zugegeben. Die Dispergierung erfolgte nach Zugabe von Mahlkörpern (Glaskugeln 2-3 mm, gleiches Volumen wie die Pigmentpaste) eine (anorg. Pigmente) beziehungsweise zwei Stunden (organische Pigmente und Ruß) in einem Skandex-Rüttler mit Luftkühlung.

### Formulierung der Blaupasten:

Die Blaupasten wurden wie folgt formuliert (Angaben in Gew.-%):

| | |
|---|---|
| 45,9 | Wasser |
| 12,2 | Phosphorsäureester-Additiv (bezogen auf 100 % Festkörper) |
| 1,0 | Entschäumer (Tego® Foamex 830, Tego Chemie Service GmbH) |
| 40,8 | Farbstoff (Heliogenblau 7080, BASF) |
| 0,1 | Konservierungsmittel (Bodoxin® AH, Bode-Chemie) |

### Formulierung der Schwarzpasten:

Die Schwarzpasten wurden wie folgt formuliert (Angaben in Gew.-%) :

| | |
|---|---|
| 56,9 | Wasser |
| 15,0 | Phosphorsäureester-Additiv (bezogen auf 100 % Festkörper) |
| 1,0 | Entschäumer (Tego® Foamex 830, Tego Chemie Service GmbH) |
| 0,1 | Konservierungsmittel (Bodoxin® AH, Bode-Chemie) |
| 27,0 | Pigment (Flammruß 101, Degussa) |

### Formulierung der Eisenoxidrotpasten:

| | |
|---|---|
| 25,8 | Wasser |
| 8,1 | Phosphorsäureester-Additiv (bezogen auf 100 % Festkörper) |
| 0,1 | Konservierungsmittel (Bodoxin® AH, Bode-Chemie) |
| 1,0 | Entschäumer (Tego® Foamex 830, Tego Chemie Service GmbH) |
| 65,0 | Eisenoxidrot (Bayferrox® 140M, Bayer) |

Die Herstellung der erfindungsgemäßen Pigmentpasten ließ sich infolge der geringeren Schaumstabilisierung in diesen Fällen mit einer geringeren Entschäumerkonzentration (0,8 statt 1,0 % vornehmen).

### Prüflacke:

Es wurden zwei kommerziell erhältliche Weißlacke auf Reinacrylatdispersionsbasis (Mowilith® DM771) und auf Basis eines lösemittelfreien Langölalkydes (Alkydal® F681, 75 %ig) verwandt.

### Weißlack 1 (wäßrig):

| | | |
|---|---|---|
| Wasser | 3,8 | |
| Additol® XW330 | 0,3 | (Netzmittel, Vianova) |
| 2%ige wäßr. Lösung | 9,4 | (Verdicker, Clariant) |
| von Tylose® MH2000 K | | |
| 10%ige wäßr. Lösung | 1,1 | (Netzmittel, Henkel) |
| von Calgon N | | |
| Foamex® 8030 | 0,4 | (Entschäumer, Tego® Chemie |
| | | Service) |
| Kronos® 2190 | 22,6 | (Titandioxid, Kronos) |
| Omyacarb® 5 GU | 16,8 | (Füllstoff, Omya) |
| Micro Talc AT1 | 3,8 | |
| China Clay B | 2,0 | |
| Mergal® K10N | 0,2 | (Konservierungsmittel, Allied |
| | | Signal) |
| Mowilith® DM771 | 37,5 | (Reinacrylatdispersion, Clari |
| | | ant) |
| Ammoniak (25%ig) | 0,2 | |
| Testbenzin | 1,1 | |
| Butyldiglycolacetat | 0,8 | |

### Weißlack 2 (lösemittelbasierend):

| | | |
|---|---|---|
| Alkydal® F681, 75 %-ig | 50,0 | (Langölalkyd, Bayer) |
| Bayertitan® R-KB-2 | 26,0 | (Titandioxid, Kerr Mc Gee) |
| Octa Soligen® Ca. 4 | 2,0 | (Trockenstoff, Borchers) |
| Bentone 34, 10%iger | 1,4 | (10 T. Bentone 34, 10 T. |
| Aufschluß | Tego® | Dispers 700, 80 T. Testbenzin) |
| | | |
| K60 | 18,0 | (Kristallöl) |
| Octa Soligen® Kobalt 6 | 0,3 | (Borchers) |
| Octa Soligen® Zirkon 18 | 2,0 | (Borchers) |
| Ascinin® R konz. | 0,3 | (Byk) |

Zur Herstellung abgetönter Lacke wurden Buntpaste und Weißlack im Verhältnis 1 g Buntpigment auf 25 g Weißpigment manuell gemischt.

### Test der Pastenstabilitäten:

Zur Ermittlung der Pastenstabilitäten wurden bei zwei verschiedenen Schergefällen (20 1/s sowie 1000 1/s) die erreichbaren Anfangsviskositäten sowie die Viskositäten nach vierwöchiger Lagerung bei 50°C bestimmt.

### Blaupasten:

| Probe | Viskosität /Pas sofort bei 20 1/s | Viskosität /Pas sofort bei 1000 1/s | Viskosität /Pas nach 4 Wo 50°C bei 20/ 1s | Viskosität /Pas nach 4 Wo 50°C bei 1000 1/s |
|---|---|---|---|---|
| A1 | 1300 | 150 | 1500 | 203 |
| A2 | 1150 | 130 | 1300 | 155 |
| A3 | 1200 | 134 | 1380 | 160 |
| A4 | 1100 | 120 | 1320 | 140 |
| A5 | 1200 | 125 | 1360 | 138 |
| A6 | 1170 | 140 | 1290 | 160 |
| A7 | 1400 | 200 | 1800 | 250 |
| B1 | 1100 | 150 | 1700 | 235 |
| B2 | 1700 | 130 | 2500 | 280 |
| B3 | 1100 | 130 | 190 | 190 |
| B4 | 2000 | 250 | 4000 | 390 |

### Schwarzpasten:

| Probe | Viskosität/dPas sofort bei 20 1/s | Viskosität/dPas sofort bei 1000 1/s | Viskosität/dPas nach 4 Wo 50°C bei 20 1/s | Viskosität/dPas nach 4 Wo 50°C bei 1000 1/s |
|---|---|---|---|---|
| A1 | 400 | 120 | 420 | 140 |
| A2 | 360 | 100 | 380 | 130 |
| A3 | 365 | 110 | 380 | 120 |
| A4 | 350 | 100 | 385 | 120 |
| A5 | 310 | 108 | 340 | 93 |
| A6 | 405 | 120 | 420 | 140 |
| A7 | 400 | 130 | 500 | 200 |
| B1 | 400 | 130 | 500 | 180 |
| B2 | 500 | 120 | keine Stabilität | |
| B3 | 420 | 130 | 700 | 182 |
| B4 | Paste nicht herstellbar | | | |

### Eisenoxidrotpasten:

| Probe | Viskosität/dPas sofort bei 20 1/s | Viskosität/dPas sofort bei 1000 1/s | Viskosität/dPas nach 4 Wo 50°C bei 20 1/s | Viskosität/dPas nach 4 Wo 50°C bei 1000 1/s |
|---|---|---|---|---|
| A1 | 790 | 320 | 1000 | 395 |
| A2 | 650 | 395 | 900 | 425 |
| A3 | 630 | 320 | 870 | 370 |
| A4 | 615 | 290 | 820 | 320 |
| A5 | 700 | 408 | 900 | 440 |
| A6 | 720 | 326 | 890 | 370 |
| A7 | 1100 | 500 | 1700 | 1000 |
| B1 | 800 | 500 | 1010 | 700 |
| B2 | 1300 | 450 | keine Stabilität | |
| B3 | 1800 | 900 | 4000 | 1300 |
| B4 | 900 | 160 | keine Stabilität | |

Aus dem jeweils nur geringen Viskositätsanstieg ließ sich die gute Stabilität der erfindungsgemäßen Pigmentpasten für alle untersuchten Pigmenttypen leicht erkennen, während die Vergleichsbeispiele nur in Einzelfällen die Herstellung stabiler Pigmentpräparationen ermöglichten.

### Test der Dispergiereigenschaften:

Aufzug der Testformulierungen mit 200 µm Naßfilmdicke; nach 5 min Trocknung Rub-Out-Test auf 1/3 der Fläche. Farbmetrische Vermessung der Aufzüge mittels eines Spektralphotometers Typ XP 68 der Fa. X-Rite.

### Dispersionslack auf Basis Mowilith® DM771/blau:

| Probe | Farbmetrische Werte L und b | | Delta E nach Rub-Out |
|---|---|---|---|
| A1 | 65,5 | -31,6 | 2,2 |
| A2 | 65,2 | -32,1 | 2,4 |
| A3 | 64,7 | -32,3 | 1,9 |
| A4 | 65,0 | -32,0 | 2,0 |
| A5 | 64,6 | -32,5 | 1,8 |
| A6 | 65,3 | -31,9 | 1,9 |
| A7 | 65,4 | -31,0 | 3,5 |
| B1 | 63,7 | -33,9 | 0,9 |
| B2 | 65,6 | -30,6 | 4,3 |
| B3 | 65,2 | -32,0 | 3,9 |
| B4 | 63,9 | -31,5 | 5,7 |

### Dispersionslack auf Basis Mowilith® DM771/rot:

| Probe | Farbmetrische Werte L,a und b | | | Delta E nach Rub-Out |
|---|---|---|---|---|
| A1 | 75,8 | 13,3 | 4,5 | 0,4 |
| A2 | 75,9 | 13,1 | 4,3 | 0,4 |
| A3 | 75,8 | 13,4 | 4,2 | 0,5 |
| A4 | 75,5 | 13,6 | 4,5 | 0,3 |
| A5 | 75,6 | 13,5 | 4,6 | 0,4 |
| A6 | 75,7 | 13,4 | 4,5 | 0,3 |
| A7 | 74,8 | 13,2 | 4,0 | 1,3 |
| B1 | 75,0 | 13,0 | 4,1 | 0,9 |
| B2 | 74,9 | 13,1 | 4,1 | 1,2 |
| B3 | 75,5 | 13,2 | 4,2 | 0,7 |
| B4 | 75,2 | 12,9 | 4,7 | 0,9 |

### Dispersionslack auf Basis Mowilith® DM771/grau:

| Probe | Farbmetrische Werte L und b | | Delta E nach Rub-Out |
|---|---|---|---|
| A1 | 60,3 | 4,5 | 0,3 |
| A2 | 60,4 | 4,4 | 0,2 |
| A3 | 60,4 | 4,4 | 0,3 |
| A4 | 60,6 | 4,5 | 0,2 |
| A5 | 60,5 | 4,3 | 0,3 |
| A6 | 60,2 | 4,4 | 0,1 |
| A7 | 61,1 | 4,4 | 1,4 |
| B1 | 59,1 | 4,3 | 0,5 |
| B2 | 61,8 | 4,3 | 1,2 |
| B3 | 62,6 | 4,3 | 2,4 |
| B4 | entfällt | | entfällt |

### Alkydlack auf Basis Alkydal® F681/blau:

| Probe | Farbmetrische Werte L und b | | Delta E nach Rub-Out |
|---|---|---|---|
| A1 | 68,0 | -29,9 | 1,5 |
| A2 | 68,2 | -29,7 | 1,7 |
| A3 | 66,7 | -30,8 | 1,6 |
| A4 | 67,3 | -29,9 | 1,4 |
| A5 | 68,0 | -29,5 | 1,7 |
| A6 | 67,8 | -30,1 | 1,6 |
| A7 | 66,5 | -28,7 | 3,3 |
| B1 | 88,0 | -4,0 | 24,7 |
| B2 | 67,7 | -29,2 | 4,2 |
| B3 | 68,8 | -28,4 | 4,1 |
| B4 | 66,3 | -28,6 | 3,1 |

### Alkydlack auf Basis Alkydal® F681/rot:

| Probe | Farbmetrische Werte L,a und b | | | Delta E nach Rub-Out |
|---|---|---|---|---|
| A1 | 76,8 | +12,3 | +2,7 | 0,4 |
| A2 | 76,6 | +12,0 | +2,6 | 0,3 |
| A3 | 77,0 | +12,1 | +2,8 | 0,4 |
| A4 | 77,5 | +12,2 | +2,7 | 0,2 |
| A5 | 77,2 | +11,9 | +2,6 | 0,6 |
| A6 | 76,9 | +11,9 | +2,7 | 0,3 |
| A7 | 78,1 | + 7,9 | +1,8 | 3,9 |
| B1 | 79,0 | +8,9 | +0,9 | 2,7 |
| B2 | 87,2 | +2,4 | +0,1 | 11,5 |
| B3 | 79,7 | +9,0 | +1,3 | 4,8 |
| B4 | 78,0 | +7,3 | +1,5 | 5,0 |

### Alkydlack auf Basis Alkydal F681/grau:

| Probe | Farbmetrische Werte L und b | | Delta E nach Rub-Out |
|---|---|---|---|
| A1 | 62,1 | 6,0 | 0,4 |
| A2 | 61,7 | 5,9 | 0,3 |
| A3 | 61,9 | 6,5 | 0,6 |
| A4 | 62,3 | 6,3 | 0,5 |
| A5 | 62,7 | 6,4 | 0,3 |
| A6 | 62,4 | 6,2 | 0,5 |
| A7 | 62,9 | 6,3 | 1,0 |
| B1 | 80,7 | 4,2 | 8,7 |
| B2 | 63,1 | 6,6 | 1,2 |
| B3 | 63,1 | 6,5 | 1,8 |
| B4 | entfällt | | entfällt |

Zu erkennen war die erzielbare günstige Farbstärkenentwicklung sowie der in allen Fällen günstige Rub-Out-Test durch die erfindungsgemäßen Dispergieradditive.

Dies wurde insbesondere auch deutlich im Vergleich zu den Vergleichsbeispielen, die lediglich in Einzelfällen zu guten Farbstärkeentwicklungen führten. Insbesondere wurde die Überlegenheit der erfindungsgemäß zu verwendenden Phosphorsäureester anhand der für alle Pigmenttypen in wasserbasierenden als auch lösemittelbasierenden Systemen vorzüglichen Rub-Out-Werte Delta E deutlich.

Ein besonders hervorzuhebendes Merkmal ist auch die deutlich verbesserte Redispergierbarkeit von an- bzw. eingetrockneten Präparationsanteilen. Weiterhin besitzen sie eine sehr niedrige Antrocknungs- oder Austrocknungsneigung. Viskosität, Fließverhalten und die damit notwendigen Voraussezungen für ausgezeichnete Dosiermöglichkeiten werden hierdurch deutlich verbessert.

Die Pigmentpräparationen besitzen eine sehr hohe Farbkraft und Brillianz. Es lassen sich hohe Pigmentkonzentrationen erzielen. Die Pigmentkonzentrate ließen sich unter geringem Mahlaufwand herstellen, was beides mit hohen wirtschaftlichen Vorteilen verbunden ist.

### Herstellung von Emulsionspolymerisaten

Der Emulgator A2 wurde in Wasser gelöst und mit Ammoniak auf pH=9 gestellt.

| | | |
|---|---|---|
| Vorlage | 1,5 g | Emulgator A2 |
| | 250 g | Wasser |
| | 36 g | Teil von Zulauf 1 |
| | 5 g | Teil von Zulauf 2 |
| | | |
| Zulauf 1 | 8,5 g | Emulgator A2 |
| | 200 g | Wasser |
| | 15 g | Acrylamid (50 %-ig in Wasser) |
| | 12,5 g | Acrylsäure |
| | 242 g | Styrol |
| | 237 g | n-Butylacrylat |
| | | |
| Zulauf 2 | 2,5 g | Na-Peroxodisulfat |
| | 98 g | Wasser |

Die Vorlage wurde in einem Polymerisationsgefäß, das mit einem Ankerrührer, Rückflußkühler und 2 Zulaufgefäßen ausgestattet war, in einer Stickstoffatmosphäre auf eine Temperatur von 85°C geheizt und 15 Minuten anpolymerisiert. Dann wurde der zulauf 1 in 2 Stunden und der Zulauf 2 in 2¼ Stunden zudosiert. Anschließend wurde noch 1 Stunde lang nachpolymerisiert Dann wurde über ein Sieb der Maschenweite 500 µm filtriert, und der Koagulatanteil im feuchten Zustand mit < 0,1 % ausgewogen. Der Feststoffgehalt der Dispersion betrug 48 % bei einer Viskosität von 130 mPas.

Die Verwendung dieser Phosphatester zur Emulsionspolymerisation ist dann vorteilhaft, wenn die Bindemittel zur Formulierung von Anstrichfarben verwendet werden, da diese Emulgatoren hohe Pigmentkonzentrationen in der Dispersion zulassen und das Pigmentbindevermögen des Polymeren somit groß ist, was wiederum - dem Fachmann geläufig - zu höheren Naßabriebfestigkeiten führt.

## Patentansprüche

1. Verwendung von blockcopolymeren Phosphorsäureestern und deren Salzen der allgemeinen Formel (I)
[R¹O(SO)ₐ(EO)_{b}(CH₂CHCH₃O)_{c}(BO)_{d}]ₓPO-(OH)₃₋ₓ (I)
wobei
R¹ = ein geradkettiger oder verzweigter oder cycloaliphatischer Rest mit 1 bis 22 Kohlenstoffatomen,
SO = Styroloxid,
EO = Ethylenoxid,
BO = Butylenoxid und
a = 1 bis 1,9,
b = 3 bis 100,
c = 0 bis 10,
d = 0 bis 3,
x = 1 oder 2 sind,
wobei b>= a+c+d ist
als Pigmentnetzmittel für Pigmentpasten, wäßrige, lösemittelhaltige, lösemittelarme und lösemittelfreie Lacke und Druckfarben.

2. Verwendung nach Anspruch 1, **dadurch gekennzeichnet, daß** man die Pigmentnetzmittel in einer Menge von 2 bis 200 Gew.-%, bezogen auf das Gewicht des jeweiligen Pigmentes einsetzt.

## Claims

1. Use of block-copolymeric phosphoric esters and their salts of the general formula (I)
[R¹O(SO)ₐ(EO)_{b}(CH₂CHCH₃O)_{c}(BO)_{d}]ₓPO- (OH)₃₋ₓ (I)
where
R¹ = a straight-chain or branched or cycloaliphatic radical having 1 to 22 carbon atoms,
SO = styrene oxide,
EO = ethylene oxide,
BO = butylenes oxide and
a = 1 to 1.9,
b = 3 to 100,
c = 0 to 10,
d = 0 to 3,
x = 1 or 2,
where b >= a+c+d
as pigment wetting agents for pigment pastes, aqueous, solventborne, low-solvent and solvent-free paints and printing inks.

2. Use according to Claim 1, **characterized in that** the pigment wetting agents are used in an amount of 2 to 200% by weight, based on the weight of the respective pigment.

## Revendications

1. Utilisation de copolymères à blocs d'esters de l'acide phosphorique et leurs sels de formule générale (I)
[R¹O(SO)ₐ(EO)_{b}(CH₂CHCH₃O)_{c}(BO)_{d}]ₓPO-(OH)₃₋ₓ (I)
où
R¹ = un radical linéaire ou ramifié ou cycloaliphatique comprenant 1 à 22 atomes de carbone
SO = oxyde de styrène
EO = oxyde d'éthylène
BO = oxyde de butylène et
a = 1 à 1,9,
b = 3 à 100,
c = 0 à 10,
d = 0 à 3,
x = 1 ou 2,
avec b≥ a+c+d
comme agents mouillants pour pâtes pigmentaires, pour laques et encres d'imprimerie aqueuses, contenant des solvants, pauvres en solvants et exemptes de solvants.

2. Utilisation selon la revendication 1, **caractérisée en ce qu'**on utilise les agents mouillants de pigments en une quantité de 2 à 200% en poids par rapport au poids du pigment.
